# EUROPEAN PATENT APPLICATION

(11) **EP 4 250 163 A1**
(43) Date of publication of application: **27.09.2023**
(21) Application number: 22872682.4
(22) Date of filing: 05.09.2022
(51) Int. Cl.: G06F 21/62, H04L 9/14

(54) **DATA SHARING SYSTEM, DATA SHARING METHOD, AND DATA SHARING PROGRAM**

(30) Priority: 23.09.2021 JP 2021154945
(71) Applicant: Eaglys Inc., Tokyo 1510051 (JP)
(72) Inventor: IMABAYASHI Hiroki, Tokyo 151-0051 (JP)
(74) Representative: Lewis Silkin LLP
(86) International application number: PCT/JP2022/033209
(87) International publication number: WO 2023/047926

(57) **Abstract**

Provided with a data sharing system capable of utilizing data possessed by each organization without disclosing the details of the data to the other organizations. A data sharing system of the present disclosure includes a sensitive data acquisition unit configured to acquire a sensitive data; an encryption unit configured to encrypt the sensitive data; a storage unit configured to store the encrypted sensitive data; a reception unit configured to receive a processing request of a data processing on the sensitive data; a first process execution unit configured to execute the data processing by executing a re-encryption of the encrypted sensitive data in a predetermined encryption scheme; a second process execution unit configured to execute the data processing without executing the re-encryption; and a control unit configured to instruct an execution of the data processing to the first process execution unit and/or the second process execution unit based on a content of the received data processing.

## Description

### TECHNICAL FIELD

The present disclosure relates to a data sharing system, a data sharing method and a data sharing program.

### BACKGROUND ART

Due to the development of an electronic commerce service and IoT (Internet of Things) provided on the Internet, the technology for performing a statistical analysis and a machine learning on a large amount of data possessed not only by the company but also by the other organizations (others) is required. For example, Patent document 1 discloses an electronic commerce system wherein a service provider can obtain analysis of transaction histories without obtaining personal information of users.

### PRIOR ART DOCUMENTS

### [Patent Documents]

[Patent document 1] Japanese Patent Application Publication No. 2019-125883

### DISCLOSURE OF THE INVENTION

### [Problems to be Solved by the Invention]

However, in the system described in Patent document 1, a service providing server which wants to perform the statistical analysis transmits an encryption key to all other service providing servers so that the other service providing servers encrypt the data by using the transmitted encryption key and transmit the encrypted data to the server of a third party organization which performs the statistical analysis. Since the data possessed by the other service providing servers is encrypted by the encryption key of the others, the other service providing servers should fear the possibility of the occurrence of problems in information security such as information leakage and illegal use.

In recent years, as the machine learning and the artificial intelligence technology are spread, the technology capable of learning a large amount of data considering problems in information security such as information leakage is desired. However, the system described in Patent document 1 merely performs the statistical analysis based on the data provided by the limited service providing device. Thus, the system described in Patent document 1 does not perform the processing of global statistics and machine learning performed by integrating the data of a plurality of service providers expecting higher prediction accuracy.

Accordingly, the present disclosure is made for solving the above described problems and the purpose of the present disclosure is to provide a data sharing system utilizing the data possessed by each of the organizations without disclosing the sensitive data to the other organizations.

### [Means for Solving the Problem]

In order to achieve the above described purpose, the data sharing system of the present disclosure includes: a sensitive data acquisition unit configured to acquire a sensitive data; an encryption unit configured to encrypt the sensitive data; a storage unit configured to store the encrypted sensitive data; a reception unit configured to receive a processing request of a data processing on the sensitive data; a first process execution unit configured to execute the data processing by executing a re-encryption of the encrypted sensitive data in a predetermined encryption scheme; a second process execution unit configured to execute the data processing without executing the re-encryption; and a control unit configured to instruct an execution of the data processing to the first process execution unit and/or the second process execution unit based on a content of the received data processing.

In order to achieve the above described purpose, data sharing method of the present disclosure is the method executed in a computer having a control unit and a storage unit, the method including: a step of acquiring a sensitive data by the control unit; a step of encrypting the sensitive data by the control unit; a step of storing the encrypted sensitive data in the storage unit; a step of receiving a processing request of a data processing of the sensitive data by the control unit; a first step of executing the data processing by executing a re-encryption of the encrypted sensitive data by the control unit; a second step of executing the data processing without executing the re-encryption by the control unit; and a step of executing the first step and/or the second step based on a content of the received data processing by the control unit.

In order to achieve the above described purpose, the data sharing program of the present disclosure makes the computer execute the information processing method.

### [Effects of the Invention]

The present disclosure can provide the data sharing system capable of utilizing the data possessed by various organizations without disclosing the details of the data to the other organizations.

### BRIEF DESCRIPTION OF THE DRAWINGS

Fig. 1 is a drawing showing a configuration of a data sharing system 1 of the present embodiment.
Fig. 2 is a functional block diagram showing an example of a functional configuration of a data providing server 100.
Fig. 3 is a drawing showing an example of the data structure of sensitive data.
Fig. 4 is a drawing showing an example of the data structure of the encrypted sensitive data.
Fig. 5 is a drawing showing an example of the data structure of the integrated data.
Fig. 6 is a functional block diagram showing an example of a functional configuration of a management server 200.
Fig. 7 is a drawing showing an example of the data structure of a configuration file.
Fig. 8 is a functional block diagram showing an example of a functional configuration of a calculation server 300.
Fig. 9 is a drawing for explaining a re-encryption key.
Fig. 10 is a functional block diagram showing an example of a function configuration of a common database 400.
Fig. 11 is a functional block diagram showing an example of a function configuration of a terminal device 500.
Fig. 12 is a flow chart showing an example of a data processing.
Fig. 13 is a block diagram showing a hardware configuration of the data providing server 100.
Fig. 14 is a functional block diagram showing an example of a functional configuration of a calculation server 1300.

### MODES FOR CARRYING OUT THE INVENTION

Hereafter, the embodiments of the present disclosure will be explained with reference to the drawings. In all drawings explaining the embodiments, the same reference signs are assigned to the common component to omit the repeated explanation. Note that the following embodiments do not unreasonably limit the content of the present disclosure described in the claims. In addition, all components disclosed in the embodiments are not necessarily essential components of the present disclosure.

### <Outline of present invention>

In recent years, the number of the organizations who possess a large amount of sensitive data such as customer information has been increased. Because of this, it is expected to perform machine learning and statistical analysis processing by utilizing not only the sensitive data possessed by own organization but also the sensitive data possessed by the other organizations to lead to new businesses. However, extreme care should be paid when treating the sensitive data. Thus, it is required to execute the data processing while preventing the information leakage.

As the technology for satisfying the above described need, "secure computing" is focused for executing the calculation efficiently while the data is encrypted. For example, the retrievable encryption is one of the methods for realizing "secure computing." The retrievable encryption is the encryption scheme enabling the data retrieval while the data is encrypted. The other organizations can retrieve the data without disclosing the content of the sensitive data possessed by own organization. However, it is impossible to execute the data processing such as the machine learning requiring highly advanced numerical calculation while the data is encrypted.

On the other hand, the homomorphic encryption which is one of the methods of realizing "secure computing" is the encryption scheme having homomorphism. In the homomorphic encryption, the numerical calculation can be executed on the encryption data encrypted by using a certain public key in a state that the data is encrypted. When the homomorphic encryption is used, the machine learning requiring highly advanced numerical calculation can be executed on the encrypted sensitive data. However, it is known that the encrypted sensitive data should be encrypted by the public key existing in the identical encryption space (i.e., encrypted by the same public key) in order to execute the machine learning with realistic performance based on a plurality of encryption data.

Accordingly, in the data sharing system of the present invention, the data processing is executed by selecting secure and efficient processing method in accordance with the content of the data processing request such as a machine learning and a retrieval processing of the sensitive data. Consequently, the data possessed by each organization can be utilized efficiently without disclosing the detail of the data to the other organizations. In the following specification, "secure computing" means the processing of executing the calculation in a state that the data is encrypted, and "calculation" means the calculation related to addition, subtraction, multiplication and division and the calculation related to the analysis and the machine learning (e.g., including condition comparison in decision tree).

### [Embodiment 1]

In the present embodiment, the management server 200 instructs the calculation server 300 and/or the common database 400 to execute the data processing in accordance with the content of the processing request of the data processing received from the terminal device 500. The calculation server 300 executes the calculation related to the machine learning as the data processing and the common database 400 executes the retrieval processing and the like as the data processing. In the present embodiment, the calculation server 300 re-encrypts the sensitive data encrypted by each data providing server 100 in the same encryption scheme using the re-encryption key without decrypting the encrypted sensitive data. Namely, the data processing of a plurality of encryption data can be executed with realistic performance by converting the plurality of encryption data into the same encryption space using the re-encryption key.

### (Configuration of data sharing system 1)

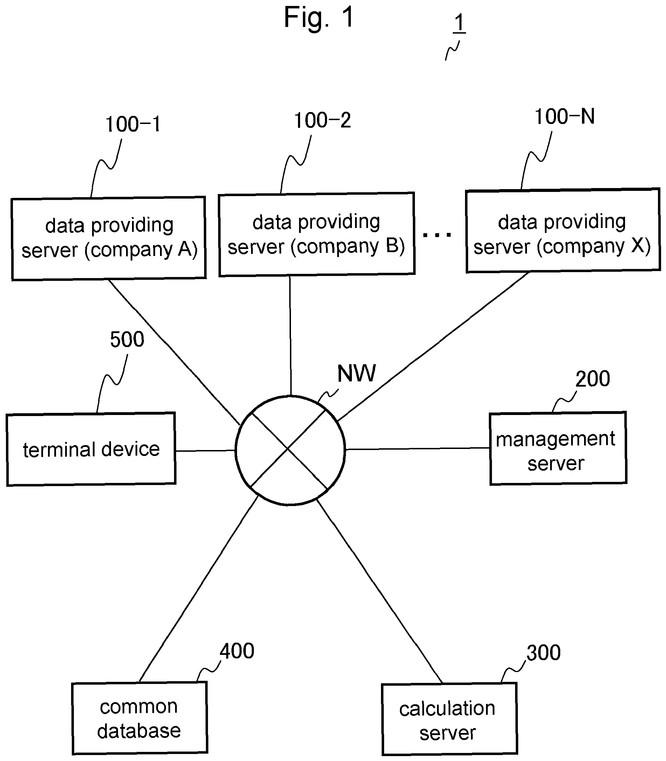

Fig. 1 is a drawing showing a configuration of a data sharing system 1. The configuration of the data sharing system 1 of the embodiment 1 will be explained with reference to Fig. 1.

The data sharing system 1 includes data providing servers 100-1, 100-2, ---, 100-N (N is natural number), a management server 200, a calculation server 300, a common database 400 and a terminal device 500. In Fig. 1, the data providing servers 100-1, 100-2, ---, 100-N, the management server 200, the calculation server 300, the common database 400 and the terminal device 500 are communicatively connected with each other via a network NW. The network NW is, for example, WAN (Wide Area Network), LAN (Local Area Network), optical line network, intranet or the like. The network NW can be comprised of arbitrary network. The data sharing system 1 is a platform that enables each of the organizations joined in the system to use the data possessed by each of the organizations without disclosing the detailed contents of the data to the other organizations. Note that the organization is not limited to a company and a party. The organization can be a department, a division, a group, a team and the like divided according to the role.

In the following explanation, the data providing servers 100-1, 100-2, ---, 100-N are referred to as a data providing server 100 unless it is necessary to distinguish them with each other. In the present embodiment, the calculation server 300 and the common database 400 are connected with the management server 200 via the network NW. However, the configuration is not limited to this. The calculation server 300 and the common database 400 can be locally connected with the management server 200.

The data providing server 100 is associated with the organization joined in the platform. The data providing server 100 encrypts the sensitive data possessed by the organization and transmits the encrypted data to the management server 200. In Fig. 1, the data providing server 100-1 is associated with "company A," the data providing server 100-2 is associated with "company B" and the data providing server 100-N is associated with "company X," for example.

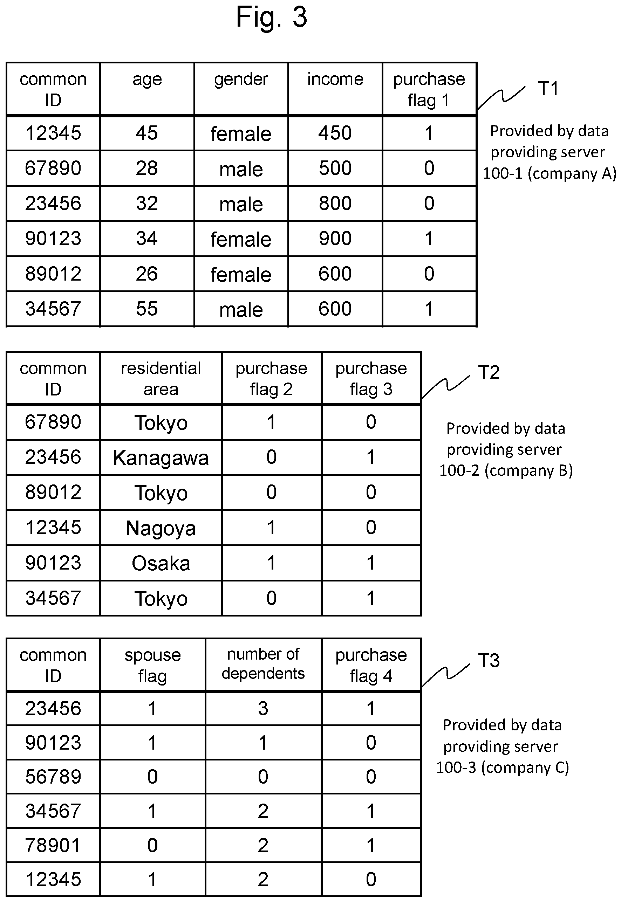

The sensitive data includes attribute values of each attribute item (column). The data providing server 100 transmits the sensitive data in which at least a part of the attribute values is encrypted to the management server 200. The data structure of the sensitive data will be described in detail in Fig. 3. In addition, the data providing server 100 of the present embodiment stores and manages the user keys associated with each user (e.g., organization) possessing the sensitive data in own server. However, the method of managing the user keys is not limited to this. The management can be entrusted to another information processing device such as a KMS (Key Management System).

The management server 200 acquires the encrypted sensitive data from each data providing server 100 and stores it in the common database 400. In addition, the management server 200 receives the processing request of the data processing of the sensitive data from the terminal device 500 and determines whether the data processing is executed by the calculation server 300 or the data processing is executed by the common database 400 based on the content of the data processing. In accordance with the above described determination, the management server 200 instructs the calculation server 300 and/or the common database 400 to execute the data processing.

The calculation server 300 re-encrypts the sensitive data stored in the common database into a predetermined encryption scheme and executes the data processing (calculation related to machine learning) in accordance with the instruction of the management server 200. In the present embodiment, the calculation server 300 stores and manages a system key (system key used for re-encryption) in own server. However, another information processing device can manage the system key. In the present embodiment, the calculation server 300 generates the re-encryption key from the user key acquired from the data providing server 100 and the system key managed by the calculation server 300 and encrypts the sensitive data using the re-encryption key. When the data providing server 100 generates the re-encryption key in own server without providing the user key to the outside, the security is further enhanced.

The common database 400 stores the sensitive data transmitted from the management server 200 as described above. In addition, the common database 400 executes the data processing (simple statistics such as retrieval processing and statistical processing) of the sensitive data without executing the re-encryption in accordance with the instruction of the management server 200.

The terminal device 500 is an information processing device used by a user of the data sharing system 1. The terminal device 500 is a PC (Personal Computer), a smartphone or a tablet terminal, for example. In addition, the terminal device 400 can be wearable terminals such as a head mount display and the like or AR (Augmented Reality)/VR (Virtual Reality)/MR (Mixed Reality) devices. The user can be an employee of the organization (e.g., company A) that joins the platform and provides the sensitive data, for example. In this case, the information processing device can be configured to be linked with the data providing server 100 of the organization to which the user belongs.

The terminal device 500 transmits the processing request of the data processing to the management server 200 wherein the data processing is targeted at the sensitive data provided from the data providing server 100. The data processing includes the calculation related to the machine learning, the retrieval processing and/or the statistical processing, for example. In addition, the data processing includes the processing of integrating the sensitive data. The processing request (processing query) of the data processing can be written by CLI (Command Line Interface) such as SQL statement or GUI (Graphical User Interface), for example.

Hereafter, the functional configuration and the processing of each of the servers and the like constituting the above described data sharing system 1 will be explained. Note that the functional block and the processing block indicating each of the functional configurations can be achieved by one or a plurality of devices, computer processors or a distribution group of computer processors. For example, the function executed by the management server 200, the calculation server 300 and the common database 400 can be achieved by one device.

### (Functional configuration of data providing server 100)

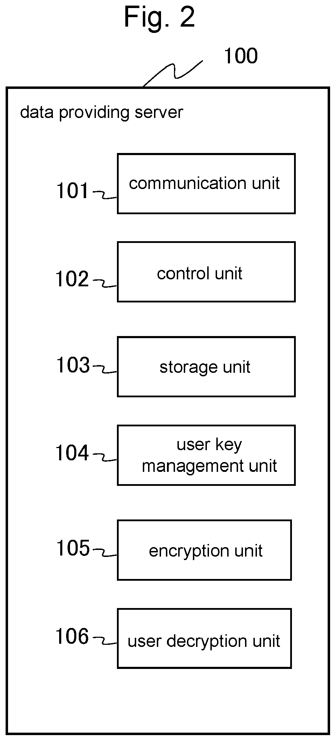

Fig. 2 is the functional block diagram showing an example of the functional configuration of the data providing server 100. An example of the functional configuration of the data providing server 100 will be explained with reference to Fig. 2.

The data providing server 100 includes a communication unit 101, a control unit 102, a storage unit 103, a user key management unit 104, an encryption unit 105 and a user decryption unit 106.

The communication unit 101 includes a communication interface circuit so that the data providing server 100 establishes the communication with the servers and the devices via a network NW according to a predetermined communication protocol. The predetermined communication protocol is TCP/IP (Transmission Control Protocol/Internet Protocol), for example. The communication unit 101 transmits the received data to the control unit 102 and transmits the data received from the control unit 102 to the servers and the devices via the network NW. The communication unit 101 can also transmit and receive the data to/from the functional blocks other than the control unit 102 in the data providing server 100. Note that the communication unit 101 transmits and receives the data to/from the devices connected via the network NW, the devices connected locally and the like using a secure communication channel where security is ensured. The explanation of the method for constructing the secure communication channel and the communication method is omitted since they are well known technology using a common key (e.g., session key), a public key and the like.

The communication unit 101 corresponds to the sensitive data acquisition unit. For example, the communication unit 101 acquires the sensitive data possessed by the organization from the organization joined in the platform. In Fig. 1, the data providing server 100-1 associated with the company A can acquire the sensitive data from the terminal device 500 operated by the employee of the company A. In the present embodiment, the sensitive data is the information related to the individual, for example. The sensitive data is the attribute value (string or numerical value) of the attribute item (column) such as the name, the age, the gender, the income, the family structure, the residential area, the work information, the bank account information, the purchase information and the medical related data. The sensitive data is not limited to the information related to the individual. The sensitive data can be log data related to the device and the data of the company treating the individual and the device, for example. In addition, the sensitive data includes an identifier (string, numerical value or combination thereof) as the attribute item so that the identifier functions as an integrated key for generating the integrated data formed by integrating a plurality of sensitive data. The common ID for uniquely identifying the individual can be used as the identifier. The data structure of the sensitive data and the integrated data will be described in detail in Fig. 3 to Fig. 5.

The control unit 102 controls the functions of the data providing server 100. The control unit 102 is a processor such as a CPU (Central Processing Unit) operated based on the programs preliminarily stored in the storage unit 103. Note that a DSP (Digital Signal Processor) or the like can be used as the control unit 102. In addition, control circuits such as an LSI (Large Scale Integration), an ASIC (Application Specific Integrated Circuit) and an FPGA (Field-Programming Gate Array) can be used as the control unit 102.

The control unit 102 controls the encryption unit 105 to encrypt the sensitive data obtained via the communication unit 101. In addition, the control unit 102 controls the user decryption unit 106 to decrypt the execution result of the data processing obtained via the communication unit 101.

The storage unit 103 includes a memory device such as a RAM (Random Access Memory) and a ROM (Read Only Memory), a fixed disk device such as a hard disk drive or a portable disk device such as a flexible disk and an optical disc, for example. In addition, the storage unit 103 stores computer programs, database, tables, keys and the like used for various processing of the data providing server 100. The computer programs can be installed in the storage unit 103 from a portable computer-readable recording medium using a conventionally known setup program, for example. The portable recording medium can be a CD-ROM (Compact Disc Read Only Memory) and a DVD-ROM (Digital Versatile Disc Read Only Memory), for example. The computer programs can be installed from a predetermined server, for example.

The storage unit 103 stores the encrypted sensitive data, the decrypted execution result of the data processing and the user keys (encryption key and decryption key) managed by the later described user key management unit 104, for example.

The user key management unit 104 manages the user keys which are associated with each user possessing the sensitive data. The user key management unit 104 can generate the key corresponding to the encryption scheme requested by the encryption unit 105, for example. For example, when the encryption scheme is the (additive) homomorphic encryption scheme (Paillier method) where addition and subtraction can be performed in the encrypted state, a group of a user public key (encryption key) and a user secret key (decryption key) is generated.

When the encryption scheme is an order-preserving encryption scheme (OPE scheme: Order Preserving Encryption) where the magnitude relation is not changed between the encrypted text and the plaintext or a retrievable encryption scheme where the coincidence of the plaintext can be judged in the encrypted state, the common key (secret key) is generated. As described above, the user keys can be different keys such as the public key and the secret key in some cases, although they can be the same key such as the common key in other cases. Note that the explanation of key generation algorithm is omitted since the key generation algorithm is conventionally known technology.

The user key management unit 104 stores the generated key, parameters for generating the key and the like in the storage unit 103, for example. The user key management unit 104 manages the generated key, the encryption scheme, the identification of the data (e.g., attribute item, column) on which the encryption is performed and the like in association with each other. Although the user key management unit 104 does not provide the user key (secret key) to the outside in principle for enhancing security, it is possible to provide the user key (secret key) in a reliable environment.

The encryption unit 105 encrypts at least a part of the attribute values of the sensitive data obtained by the communication unit 101 by the predetermined encryption scheme. The predetermined encryption scheme includes the encryption scheme that is capable of performing the calculation of at least a part of the attribute values of the sensitive data obtained by the communication unit 101 in the encrypted state. For example, the predetermined encryption scheme can be a homomorphic encryption scheme, an order-preserving encryption scheme, AES (Advanced Encryption Standard), DES (Data Encryption Standard), the retrievable encryption, SHA (Secure Hash Algorithm), MD5 (Message Digest algorithm 5) and the like. The explanation of encryption algorithm is omitted since the encryption algorithm is conventionally known technology. Note that the "calculation" includes the calculation related to addition, subtraction, multiplication and division and the calculation related to the analysis and the machine learning (e.g., including condition comparison in decision tree).

In the present embodiment, when the data format of the attribute value of the attribute item included in the sensitive data is a numerical value, the encryption unit 105 performs the encryption using the homomorphic encryption scheme (e.g., Paillier scheme, Lifted-Elgamal scheme, Somewhat Homomorphic Encryption scheme, Fully Homomorphic Encryption scheme) and/or the order-preserving encryption scheme (OPE scheme). Since the processing efficiency varies depending on the encryption scheme and the content of the data processing, the encryption unit 105 can store each of the attribute items in the storage unit 103 in a plurality of encryption schemes (e.g., the attribute value encrypted by the homomorphic encryption scheme, the attribute value encrypted by the order-preserving encryption scheme, the attribute value encrypted by the later described retrievable encryption scheme).

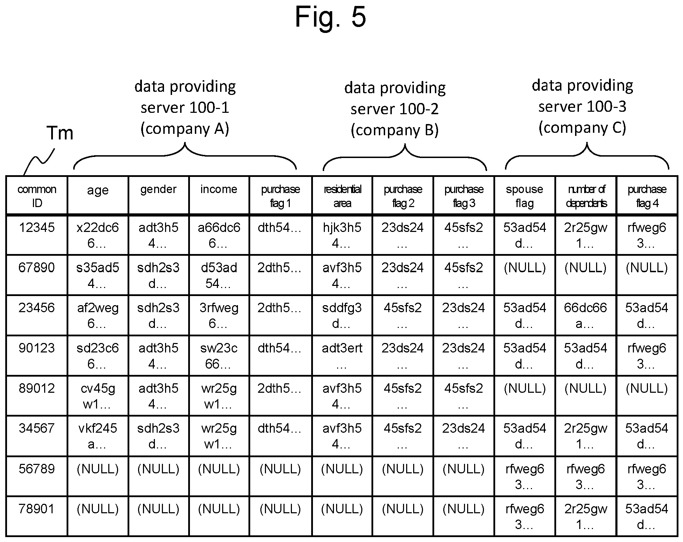

When the data format is the string in the attribute value of the attribute item included in the sensitive data, the encryption unit 105 performs the encryption using the retrievable encryption scheme or the AES encryption where the complete matching is possible in the encrypted text, for example. Note that the above described encryption schemes applied depending on the data format are merely examples. The organization possessing the sensitive data can arbitrarily determine the target attribute value of the attribute item to be encrypted and the encryption scheme used for the encryption. In addition, it is also possible to determine whether or not to encrypt the sensitive data according to the intention of the individual. In the present embodiment, the encryption unit 105 does not encrypt the identifier included as one of the attribute items. However, the encryption unit 105 can encrypt the identifier included as one of the attribute items in another embodiment. The process of generating the integrated data based on the identifier will be descried in detail in Fig. 5.

In addition, the encryption unit 105 encrypts a predetermined data (e.g., SQL statement as the processing request) transmitted from the management server 200 in accordance with the request from the management server 200. Since the encryption unit 105 uses the SQL statement encrypted by the retrievable encryption, AES encryption or the like, the matching retrieval can be executed while the sensitive data is encrypted.

The decryption unit 106 decrypts the execution result of the data processing executed in the common database 400 and obtained by the communication unit 101. More specifically, in the execution result to which the processing request of the decryption processing is requested from the management server 200, the decryption unit 106 acquires the corresponding user key from the storage unit 103 and decrypts the execution result of the data processing of the attribute item encrypted by the encryption key managed by the key management unit 104 in accordance with the encryption scheme used for encrypting the corresponding attribute item. Note that the explanation of decryption algorithm is omitted since the decryption algorithm is conventionally known technology.

In addition, the decryption unit 106 transmits the decrypted execution result to the control unit 102, and the control unit 102 transmits the decrypted execution result to the management server 200 via the communication unit 101. Alternatively, the control unit 102 can transmit the decrypted execution result to the terminal device 500 from which the processing request of the data processing is transmitted in accordance with the request from the management server 200.

Fig. 3 is a drawing showing an example of the data structure of the sensitive data. In the present embodiment, the sensitive data is the information about the individual. The sensitive data is the attribute value (string or numerical value) of the attribute item (column) such as the age, the gender, the income, the residential area and the purchase information. Furthermore, the sensitive data includes the identifier (common ID) as one of the attribute items for uniquely identifying the individual as the integrated key. The identifier can be a numerical value, a string or the combination of the numerical value and the string. For simplifying the explanation, predetermined attribute items are shown in Fig. 3. However, the not illustrated attribute items can be further included in the sensitive data. In addition, the sensitive data is not limited to the information about the individual. The sensitive data can be confidential information (e.g., sensing data and log data) related to the system of IoT/NW devices, industrial devices and the like. Furthermore, the integrated key is not limited to the identifier uniquely identifying the individual. An arbitrary value can be used as the integrated key as long as it can uniquely identify the data in a plurality of tables.

In Fig. 3, tables T1, T2 and T3 storing the attribute values of the attribute items are shown. The table 1 shows the sensitive data provided by the data providing server 100-1 (i.e., the data possessed by the company A). In the table T1, the sensitive data includes "common ID" as the identifier for uniquely identifying the individual, "age" indicating the age of the individual, "gender" indicating the gender of the individual, "income" indicating the income of the individual, and "purchase flag 1" indicating the presence or absence of the purchase of the product 1 purchased by the individual as the attribute items. In the table T1, the attribute values of the attribute items of "common ID," "age," "income" and "purchase flag 1" are the numerical values. Although the attribute value of "gender" is the category (string) in Fig. 3, the category can be also shown by the numerical value by associating the gender with the numerical value, for example.

In the table T1, the attribute value "12345" is stored for the attribute item "common ID," the attribute value "45" is stored for the attribute item "age," the attribute value "female" is stored for the attribute item "gender," the attribute value "450" is stored for the attribute item "income" and the attribute value "1" is stored for the attribute item "purchase flag 1." This means that the age of the individual who has the common ID of 12345 is 45 years, the gender is female, the income is 450 (ten thousand yen) and the individual has already bought the product 1. Similarly, for the attribute values "67890," "23456," "90123," "89012" and "34567" of the attribute item "common ID," the attribute values are stored for each of the attribute items.

The table 2 shows the sensitive data provided by the data providing server 100-2 (i.e., the data possessed by the company B). The data providing server 100-2 provides the sensitive data including the attribute item different from that of the company A possessing the sensitive data shown in the table T1.

In the table T2, the sensitive data includes "common ID" as the identifier for uniquely identifying the individual, "residential area" indicating the area in which the individual lives, "purchase flag 2" indicating the presence or absence of the purchase of the product 2 purchased by the individual, and "purchase flag 3" indicating the presence or absence of the purchase of the product 3 purchased by the individual as the attribute items. In the table T2, the attribute values of the attribute items "common ID," "purchase flag 2" and "purchase flag 3" are the numerical values, while the attribute values of the attribute item "residential area" are the string. Although the attribute value of "residential area" is the category (string) in Fig. 3, the category can be also shown by the numerical value by associating the area with the numerical value, for example. For example, in the table T2, the attribute value "67890" is stored for the attribute item "common ID," the attribute value "Tokyo" is stored for the attribute item "residential area," the attribute value "1" is stored for the attribute item "purchase flag 2" and the attribute value "0" is stored for the attribute item "purchase flag 3." This means that the residential area of the individual who has the common ID of 67890 is Tokyo, the individual has already bought the product 2 and the individual has not bought the product 3 yet. Similarly, for the attribute values "23456," "89012," "12345," "90123" and "34567" of the attribute item "common ID," the attribute values are stored for each of the attribute items.

Although the attribute items are different between the table T1 and the table T2 except for "common ID," the record shown by the same "common ID" corresponds to the same individual. For example, the record (individual) identified by the attribute value "67890" of "common ID" in the table T1 is same as the record (individual) identified by the attribute value "67890" of "common ID" in the table T2.

The table T3 shows the sensitive data provided by the data providing server 100-3 (i.e., the data possessed by the company C). The data providing server 100-3 provides the sensitive data different from the sensitive data of the company A and the company B possessing the sensitive data shown in the table T1 and the table T2.

In the table T3, the sensitive data includes "common ID" as the identifier for uniquely identifying the individual, "spouse flag" indicating the presence or absence of the spouse, "number of dependents" indicating the number of the dependents and "purchase flag 4" indicating the presence or absence of the purchase of the product 4 purchased by the individual as the attribute item. In the table T3, the attribute values of the attribute items "common ID," "spouse flag," "number of dependents" and "purchase flag 4" are the numerical values. For example, in the table T3, the attribute value "23456" is stored for the attribute item "common ID," the attribute value "1" is stored for the attribute item "spouse flag," the attribute value "3" is stored for the attribute item "number of dependents" and the attribute value "1" is stored for the attribute item "purchase flag 4." This means that the individual who has the common ID of 23456 has the spouse, the individual has three dependents and the individual has already bought the product 4. Similarly, for the attribute values "90123," "56789," "34567," "78901" and "12345" of the attribute item "common ID," the attribute values are stored for each of the attribute items.

The attribute items are different between the table T3 and the table T1 or T2 except for "common ID." In addition, the attribute values "56789" and "78901" are included only in the table T3 as the attribute item "common ID." Namely, it is not necessary that the same group of the records is included in all tables. The table can include the group of the records that are different from those of another table. In the present embodiment, as shown in Fig. 3, the attribute items included in the sensitive data provided by each of the data providing servers are different except for "common ID" (identifier). However, the same attribute item can be included as another embodiment. In that case, a system administrator or the like can properly specify and determine which of the data providing servers is prioritized as the attribute value of the integrated data.

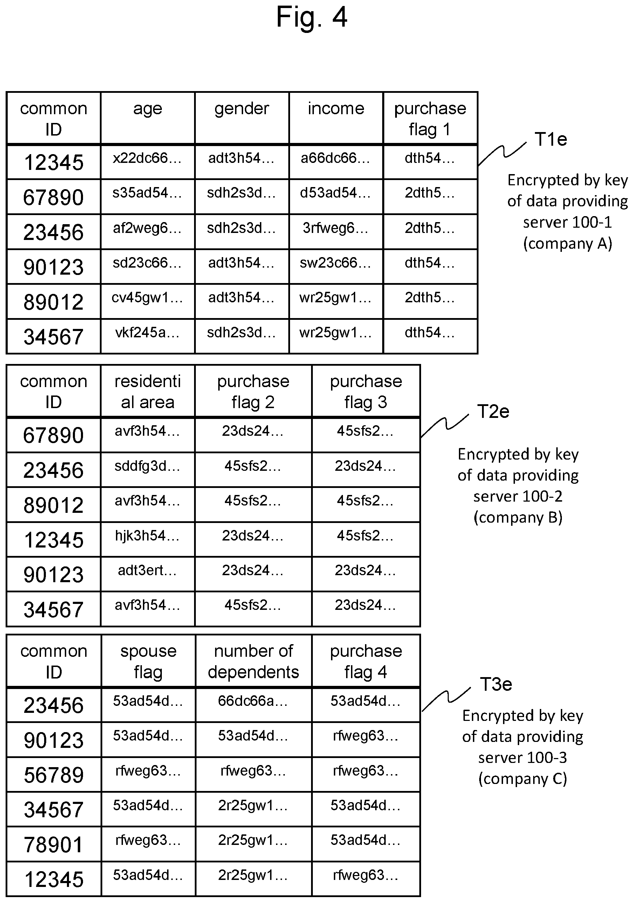

Fig. 4 is a drawing showing an example of the data structure of the encrypted sensitive data. In Fig. 4, the tables T1e, T2e and T3e in which the attribute values of the attribute items are encrypted except for "common ID" are shown. The management server 200 acquires the above described encrypted tables (sensitive data) from each data providing server 100 and stores them in the common database 400. The common database 400 is a relational database storing a table having the attribute items as columns, for example.

In the table T1e, the attribute values of the table T1 are encrypted except for "common ID" by using the user key managed by the data providing server 100-1 (company A) as the encryption key. For example, the attribute items "age," "income" and "purchase flag 1" whose attribute values are indicated by the numerical values are encrypted by the homomorphic encryption scheme and/or the order-preserving encryption schemes, while the attribute item "gender" whose attribute values are indicated by the string is encrypted by the retrievable encryption scheme. For simplifying the explanation, the values encrypted by the homomorphic encryption scheme are shown in the table T1e for the data of the attribute values indicated by the numerical value (hereafter, same in the tables T2e and T3e).

In the table T2e, the attribute values of the table T2 are encrypted except for "common ID" using the user key managed by the data providing server 100-2 (company B) as the encryption key. For example, the attribute items "purchase flag 2" and "purchase flag 3" whose attribute values are indicated by the numerical values are encrypted by the homomorphic encryption scheme and/or the order-preserving encryption scheme, while the attribute item "residential area" whose attribute values are indicated by the string is encrypted by the retrievable encryption scheme.

In the table T3e, the attribute values of the table T3 are encrypted except for "common ID" using the user key managed by the data providing server 100-3 (company C) as the encryption key. For example, the attribute items "spouse flag," "number of dependents" and "purchase flag 4" whose attribute values are indicated by the numerical values are encrypted by the homomorphic encryption scheme and/or the order-preserving encryption scheme.

It is not necessary to encrypt the attribute values of all attribute items except for "common ID" in each of the tables by the same encryption key. For example, it is possible to encrypt them by using different keys according to the degree of importance or the like. In addition, it is possible to determine the attribute values to be encrypted according to the disclosure condition or the like of each of the attribute items. For example, it is possible to specify the data providing server 100-3 not to encrypt the attribute values of the attribute item "purchase flag 4" in the table T3 according to the instruction of the organization (company C) possessing the sensitive data.

In addition, although the numerical values of the encrypted data are same in Fig. 4 when the attribute values of the data are same in Fig. 3, the following method can be employed for increasing the security. For example, both attribute values are stored: one is the attribute value (retrieval data) encrypted as it is for a retrieval processing; and the other is the attribute value (communication data) encrypted by adding random values before and after the attribute value. Thus, it is possible to use the retrieval data for the retrieval processing with complete matching and use the communication data for the communication. In this case, the added random values are deleted after the decryption to output the attribute value. Although the attribute values except for "common ID" are encrypted in Fig. 4, the attribute item itself and the attribute value of the common ID can be also encrypted.

Fig. 5 is a drawing showing an example of the data structure of the integrated data. In Fig. 5, an integrated table Tm is the table integrated by using the attribute values (identifiers) of the attribute item "common ID" included in the tables T1e, T2e and T3e as the integrated key. Namely, the integrated data is the table Tm including "common ID," "age," "income," "purchase flag 1," "residential area," "purchase flag 2," "purchase flag 3," "spouse flag," "number of dependents" and "purchase flag 4" as the attribute items wherein the attribute values of the attribute items except for "common ID" are encrypted as shown in Fig. 4. The calculation server 300 and the common database 400 generate the integrated data in accordance with the content of the data processing. It is also possible that the common database 400 generates the integrated data and transmits it to the calculation server 300 in response to the request of the integration processing transmitted from the calculation server 300. It is also possible to store the integrated data generated by the calculation server 300 or the common database 400 in the common database 400 and generate the integrated data by the common database 400 when the integrated data on which the data processing is executed is not stored in the common database 400. Note that the rows of the integrated table are referred to as "record" in this specification.

In the integrated table Tm, the attribute items (columns) "age," "income" and "purchase flag 1" are the sensitive data provided by the data providing server 100-1 (company A). The attribute items (columns) "residential area," "purchase flag 2" and "purchase flag 3" are the sensitive data provided by the data providing server 100-2 (company B). The attribute items (columns) "spouse flag," "number of dependents" and "purchase flag 4" are the sensitive data provided by the data providing server 100-3 (company C).

As for the attribute values of the attribute items included in the table T3 and not included in the tables T1 and T2 (e.g., the attribute values "56789" and "78901" of "common ID"), a designer of the database or an administrator of the management server 200 or the like can arbitrarily determine to store a blank (NULL) value or a dummy numerical value, for example. Alternatively, it is also possible to delete the record in which the attribute values other than the attribute value of the attribute item "common ID" is not stored in the integrated data.

Namely, in the example of Fig. 5, the integration processing including the integration of the table in a lateral direction (i.e., addition of "attribute item" (column) and the integration of the table in a vertical direction (i.e., addition of "record") is performed using the attribute item "common ID" shown in the tables T1e, T2e and T3e of Fig. 4 as the integrated key. Note that the common database 400 is not limited to the relational database illustrated above. The kind of the common database 400 can be NoSQL, NewSQL and Graph Database, for example.

### (Functional configuration of management server 200)

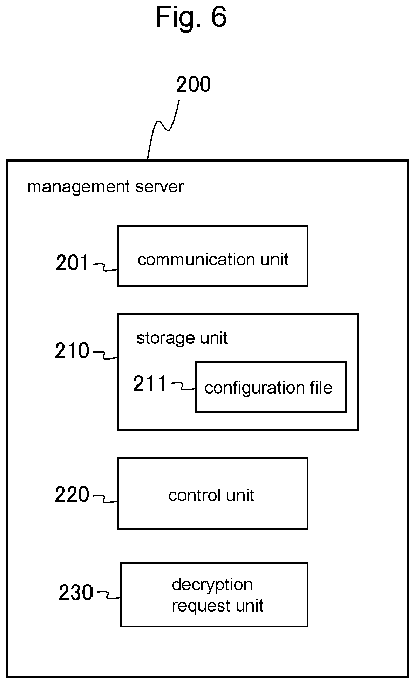

Fig. 6 is a functional block diagram showing an example of a functional configuration of the management server 200. With reference to Fig. 6, an example of the functional configuration of the management server 200 will be explained.

The management server 200 includes a communication unit 201, a storage unit 210, a control unit 220 and a decryption request unit 230.

The communication unit 201 includes a communication interface circuit so that the management server 200 can establish the communication with the other servers and the devices via the network NW according to a predetermined communication protocol. The communication unit 201 transmits the received data to the control unit 220 and transmits the data received from the control unit 220 to the other servers and the devices via the network NW.

In addition, the communication unit 201 functions as the reception unit for receiving the processing request of the later described data processing processed to the sensitive data stored in the common database 400. The processing request of the data processing is transmitted from the terminal device 500, for example. In addition, the communication unit 201 transmits and receives the execution result of the data processing. Note that the communication unit 201 transmits and receives the data to/from the devices and the like via the network NW using a secure communication channel where security is ensured. The explanation of the method of constructing the secure communication channel and the communication method is omitted since they are well known technology.

The storage unit 210 includes a memory device such as a RAM (Random Access Memory) and a ROM (Read Only Memory), a fixed disk device such as a hard disk drive or a portable disk device such as a flexible disk and an optical disc, for example. In addition, the storage unit 210 stores computer programs, database, tables and the like used for various processing of the management server 200. The computer programs can be installed in the storage unit 210 from a portable computer-readable recording medium using a conventionally known setup program, for example. The portable recording medium can be a CD-ROM (Compact Disc Read Only Memory) and a DVD-ROM (Digital Versatile Disc Read Only Memory), for example. The computer programs can be installed from a predetermined server, for example.

The storage unit 210 has a configuration file 211 related to the data processing. The configuration file 211 defines a criterion for determining whether or not to execute the data processing. For example, the configuration file 211 stores the users or the like having the execution authority of the data processing in association with the attribute items of the sensitive data. In addition, the configuration file 211 stores the device (organization) from which the data is provided in association with the attribute items of the sensitive data. Note that the configuration file 211 can be arbitrarily specified by the administrator of the management server 200, the administrator of the data providing server 100 or the associated organization.

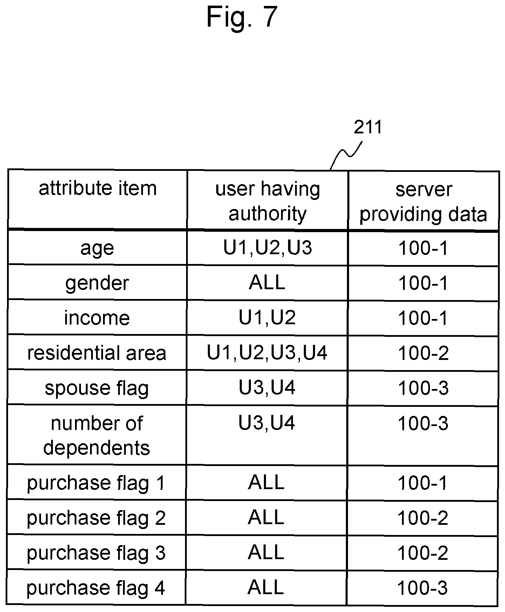

Fig. 7 is a drawing showing an example of the data structure of the configuration file. In Fig. 7, the configuration file 211 stores the "attribute items" included in the sensitive data (shown in Fig. 2 and other figures) by associating "user having authority" for performing the data processing with "server providing the data" (data providing server) providing the corresponding attribute items (columns).

The authority for performing the data processing about the attribute item is the authority for performing the statistical processing, the retrieval processing and the machine learning about the attribute values of the attribute items specified as the object of the data processing. For example, it is the authority for executing the data processing for the attribute item "age" as the object. For example, it is the authority of the statistical processing for calculating an average value, a maximum value and a minimum value of the attribute values or the retrieval processing for calculating the number of the records having a predetermined age or more. In addition, it can be the authority for performing the statistical processing for the attribute item "gender" as the object for extracting the records of the female, counting the number of the extracted records, or calculating an average value of the attribute values of a predetermined attribute item, for example. In addition, it can be the authority for executing the machine learning for predicting the product to be recommend to the user with "purchase flag 1" for increasing the purchase rate by utilizing the attribute items, for example.

Here, the "user having authority" for the attribute item "age" is "U1, U2, U3" and the "user having authority" for the attribute item "gender" is "ALL" (all users). Accordingly, as for the data processing processed to the sensitive data, in case the average of the attribute item "age" is calculated for the record of the attribute value "female" for the attribute item "gender," the user has the authority for performing the processing request when the user who transmits the processing request is any one of "U1, U2, U3." Since the other users than "U1, U2, U3" do not have the authority for executing the data processing about "age," the other users cannot execute the data processing of calculating the average of the attribute item "age" of the attribute item "female."

In Fig. 6, the control unit 220 is a processor such as a CPU (Control Processing Unit) operated based on programs preliminarily stored in the storage unit 210 to control the functions of the management server 200. Note that a DSP (digital signal processor) or the like can be used as the control unit 220. In addition, control circuits such as an LSI (large scale integration), an ASIC (Application Specific Integrated Circuit) and an FPGA (Field-Programming Gate Array) can be used as the control unit 220.

The control unit 220 makes the common database 400 store the sensitive data received by the communication unit 201. In addition, the control unit 220 instructs the calculation server 300 (first process execution unit) and/or the common database 400 (second process execution unit) to execute the data processing based on the processing request of the data processing of the sensitive data received by the communication unit 201. For example, when the content of the data processing is the calculation related to the machine learning, the control unit 220 instructs the calculation server 300 to execute the data processing. Alternatively, when the content of the data processing is the retrieval processing and/or the statistical processing of at least a part of the attribute items of the sensitive data, the control unit 220 instructs the common database 400 to execute the data processing.

It is also possible that the control unit 220 judges whether or not to execute the data processing based on the content of the processing request of the data processing and the configuration file 211. As described above, the configuration file 211 stores each of the attribute items of the sensitive data in association with the user having the authority for executing the data processing. The control unit 220 judges whether or not the user who performs the processing request of the data processing has the authority for executing the data processing to the attribute item on which the data processing is executed. When the control unit 220 judges that the user does not have the authority, the control unit 220 can transmit an error notification to the user who performs the processing request via the communication unit 201 for notifying that the user does not have the authority, for example. When the control unit 220 judges that the user has the authority, the control unit 220 instructs the calculation server 300 and/or the common database 400 to execute the data processing in accordance with the content of the data processing.

The decryption request unit 224 transmits the processing request of the decryption processing to the data providing server 100 for requesting the data providing server 100 to decrypt the execution result of the data processing executed by the common database 400. The decryption request unit 230 acquires the execution result decrypted by the data providing server 100 via the communication unit 201, and provides the acquired execution result to the terminal device 500 from which the processing request of the data processing is transmitted. Note that the terminal device 500 from which the processing request of the data processing is transmitted can preliminarily transmit the public key for encrypting the decrypted execution result to the management server 200 at the same time when transmitting the processing request of the data processing. In this case, the decryption request unit 230 transmits the public key of the terminal device 500 together with the processing request of the decryption processing to the data providing server 100. The data providing server 100 encrypts the execution result decrypted in own server using the received public key, and transmits the encrypted data to the management server 200. The terminal device 500 receives the execution result encrypted by the public key of the terminal device 500 from the management server 200 and decrypts the execution result using the secret key of the terminal device 500. Thus, the terminal device 500 can acquire the execution result. Consequently, the data processing can be performed without disclosing the execution result to the management server 200. Although the example of encrypting the execution result by the public key of the terminal device 500 is described above, the execution result can be encrypted by the common key preliminarily shared in the data sharing system 1, for example.

### (Functional configuration of calculation server 300)

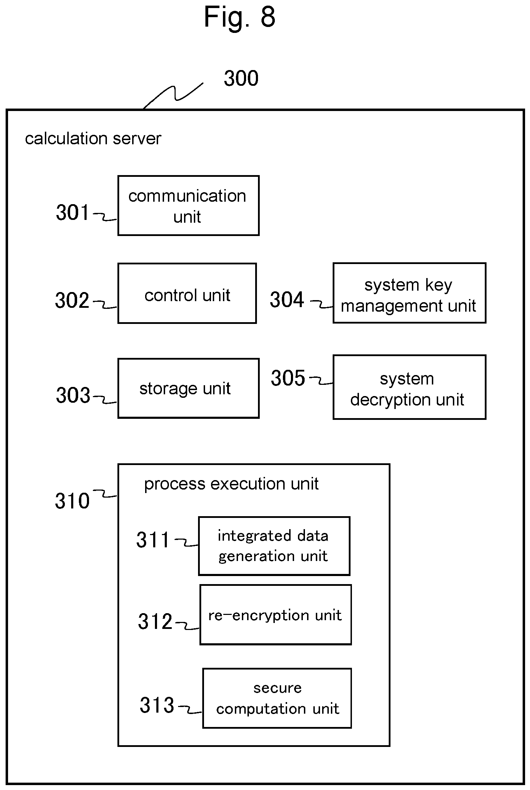

Fig. 8 is a functional block diagram showing an example of the functional configuration of the calculation server 300. With reference to Fig. 8, an example of the functional configuration of the calculation server 300 will be explained.

The calculation server 300 includes a communication unit 301, a control unit 302, a storage unit 303, a system key management unit 304, a system decryption unit 305 and a process execution unit 310.

The communication unit 301 includes a communication interface circuit so that the management server 300 can establish the communication with the other servers and the devices via the network NW according to a predetermined communication protocol. The communication unit 301 transmits the received data to the control unit 302 and transmits the data received from the control unit 302 to the other servers and the devices via the network NW. Note that the communication unit 301 transmits and receives the data to/from the devices and the like via the network NW using a secure communication channel where security is ensured. The explanation of the method of constructing the secure communication channel and the communication method is omitted since they are well known technology.

The control unit 302 controls the functions of the calculation server 300. The control unit 302 is a processor such as a CPU (Central Processing Unit) operated based on the programs preliminarily stored in the storage unit 303. Note that a DSP (Digital Signal Processor) or the like can be used as the control unit 302. In addition, control circuits such as an LSI (Large Scale Integration), an ASIC (Application Specific Integrated Circuit) and an FPGA (Field- Programmable Gate Array) can be used as the control unit 302. The control unit 302 acquires the sensitive data on which the data processing is executed from the common database 400 via the communication unit 301 and stores the acquired sensitive data in the storage unit 303.

The storage unit 303 includes a memory device such as a RAM (Random Access Memory) and a ROM (Read Only Memory), a fixed disk device such as a hard disk drive or a portable disk device such as a flexible disk and an optical disc, for example. In addition, the storage unit 303 stores computer programs, database, tables and the like used for various processing of the calculation server 300. The computer programs can be installed in the storage unit 303 from a portable computer-readable recording medium using a conventionally known setup program, for example. The portable recording medium can be a CD-ROM (Compact Disc Read Only Memory) and a DVD-ROM (Digital Versatile Disc Read Only Memory), for example. The computer programs can be installed from a predetermined server, for example. In addition, the storage unit 303 stores the keys generated by the system key management unit 304 and the parameters and the like for generating the keys.

The system key management unit 304 manages the system key. Only the administrator of the data sharing system 1 has the access authority to the system key. The users of the data sharing system 1 do not have the access authority to the system key.

The system key management unit 304 can generate and manage the key corresponding to the encryption scheme applied to the sensitive data, for example. When the encryption scheme is the public key encryption scheme such as the homomorphic encryption scheme (Paillier scheme), a pair of a system public key and a system secret key is generated. When the encryption scheme is the common key encryption scheme such as the order-preserving encryption scheme and the retrievable encryption scheme, a system common key is generated. As described above, the system key can be a pair of the system public key and the system secret key or the system key can be the system common key. Note that the explanation of key generation algorithm is omitted since the key generation algorithm is conventionally known technology.

The system decryption unit 305 decrypts the calculation result of a secure computation unit 313 of the later-described process execution unit 310 based on the system key. The system decryption unit 305 transmits the decrypted execution result to the control unit 302 and the control unit 302 transmits the decrypted execution result to the management server 200 via the communication unit 301. At this time, the control unit 302 can acquire the public key of the terminal device 500 from which the processing request of the data processing is transmitted, encrypt the execution result by the public key and transmit the encrypted execution result to the management server 200. Alternatively, the control unit 302 can transmit the decrypted execution result to the terminal device 500 from which the processing request of the data processing is transmitted in accordance with the request of the management server 200.

The process execution unit 310 corresponds to the first process execution unit configured to execute the data processing by executing a re-encryption of the encrypted sensitive data in a predetermined encryption scheme. The process execution unit 310 includes an integrated data generation unit 311, a re-encryption unit 312 and a secure computation unit 313.

The integrated data generation unit 311 generates an integrated data by integrating the sensitive data obtained from the common database 400 based on an identifier (common ID in the example shown in Fig. 4) which is included in the sensitive data as the attribute item. The integrated data generation unit 311 stores the generated integrated data in the storage unit 303. Note that the integrated data generation unit 311 determines the table (sensitive data) to be integrated in accordance with the content of the data processing. Namely, the sensitive data is not integrated in some cases depending on the content of the data processing. For example, when the attribute item on which the data processing is executed is included in the sensitive data provided by one of the data providing servers 100 and not included in a plurality of sensitive data, it is not required to integrate the sensitive data.

For example, the example shown in Fig. 4 will be explained specifically as the re-encrypted sensitive data. When the content of the data processing is to learn the correlation of the attribute items "age," "gender" and "purchase flag 1," all of the attribute items "age," "gender" and "purchase flag 1" are included in the table T1e provided by the data providing server 100-1. Thus, the table is not integrated and the object of the data processing is only the table T1e. On the other hand, when the content of the data processing is to learn the correlation of the attribute items "income," and "purchase flag 2" and "purchase flag 4," the attribute items are included in tables T1e, T2e and T3e. Thus, the integrated data generation unit 311 integrates these tables.

Note that the integration of the data can be performed before the re-encryption or after the re-encryption as described above. In addition, the integrated data generation unit 311 can request the common database 400 to integrate the table to be processed based on the content of the data processing. In this case, the common database 400 generates the integrated data and transmits the integrated data to the calculation server 300.

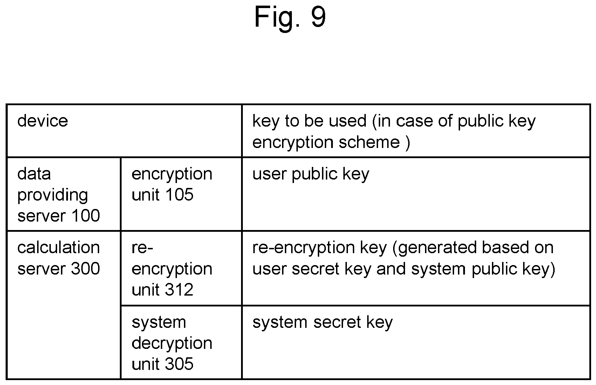

The re-encryption unit 312 re-encrypts the integrated sensitive data using the re-encryption key (described in detail in Fig. 9) into the sensitive data of a predetermined encryption scheme. The re-encryption is executed by using the re-encryption key generated based on the system key managed by the calculation server 300. Thus, the attribute values of each of the attribute items encrypted by different encryption keys are re-encrypted in the same encryption space respectively for each of the predetermined encryption schemes. In more detail, the re-encryption unit 312 encrypts the sensitive data by the re-encryption key in accordance with the encryption scheme of the sensitive data. For example, the sensitive data encrypted by the homomorphic encryption scheme in the data providing server 100 is re-encrypted by the same homomorphic encryption scheme using the re-encryption key corresponding to the data providing server 100. The sensitive data encrypted by AES is re-encrypted by the same AES using the re-encryption key. It is also possible to convert the sensitive data into different encryption scheme in accordance with the encryption scheme of the sensitive data without using the same encryption scheme before and after the re-encryption. The re-encryption unit 312 stores (registers) the re-encrypted integrated data in the storage unit 303.

Note that the object to be re-encrypted is not limited to the integrated sensitive data (integrated data). The object may also include the sensitive data including the attribute values encrypted by the same encryption scheme using different encryption keys even when the sensitive data is not integrated. For example, in the example shown in Fig. 4, although the table T1 is the sensitive data possessed by the company B, even when the attribute values (numerical values) of the attribute items "age" and "income" are encrypted by the same encryption scheme (homomorphic encryption), these may be encrypted by different user keys depending on the importance of the data or the like. In the above described case, it is necessary to execute the re-encryption in the same encryption space.

The secure computation unit 313 executes the secure computing based on the sensitive data stored in the storage unit 303. The secure computation unit 313 stores the execution result in the storage unit 303. Here, the secure computing executed by the secure computation unit 313 is the model learning and the inference achieved by the data mining and the machine learning. The analysis algorithm of statistical method, deep learning or the like can be used. The secure computation unit 313 can execute the secure computing about the sensitive data provided by one of the data providing servers 100 or execute the secure computing about the integrated data generated by the integrated data generation unit 311. As described above, the integrated sensitive data is re-encrypted into the sensitive data of the predetermined encryption scheme for each of the attribute items by the homomorphic encryption scheme, the order-preserving encryption scheme, the retrievable encryption scheme or the AES encryption where the complete matching is possible in the encrypted text. For example, the calculation related to addition, subtraction, multiplication and division and the calculation related to the analysis and the machine learning can be executed on the attribute items in the encrypted state.

Fig. 9 is a drawing for explaining a re-encryption key. In Fig. 9, the method based on the public key encryption scheme will be explained.

As described above, the encryption unit 105 of the data providing server 100 encrypts the sensitive data using the user public key. On the other hand, the re-encryption unit 312 of the calculation server 300 uses the re-encryption key generated based on the user secret key and the system public key when re-encrypting the sensitive data. The re-encryption key can be generated based on the user secret key which is acquired by the calculation server 300 from the user key management unit 104 of the data providing server 100 providing the sensitive data and the system public key managed by the system key management unit 304 of the calculation server 300. However, it is preferred that the data providing server 100 acquires the system public key to generate the re-encryption key based on the acquired system public key and the user secret key of the data providing server 100. In this case, since the user secret key is not provided to the outside of the data providing server 100, the safety can be maintained more certainly.

The re-encryption key can be generated by a key generation algorithm based on the user secret key and the system public key, for example. Alternatively, the re-encryption key can be generated by encrypting the user secret key by the system public key.

Although the example of using the public key encryption scheme is explained in Fig. 9, the re-encryption key can be generated by using the user common key and the system common key in case of the common key encryption scheme.

### (Functional configuration of common database 400)

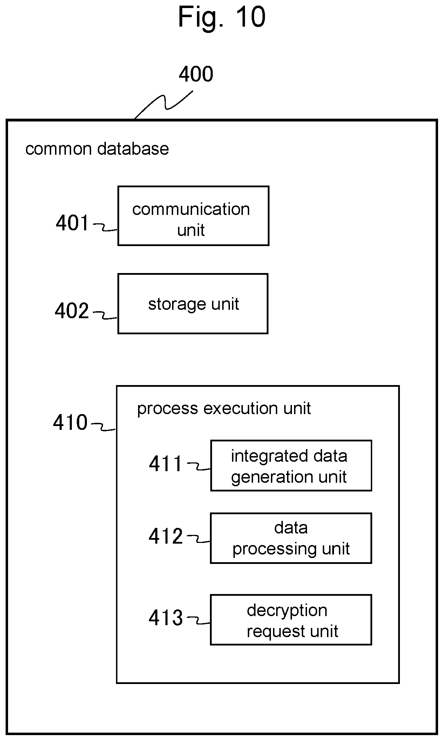

Fig. 10 is a functional block diagram showing an example of a function configuration of the common database 400. With reference to Fig. 10, an example of the functional configuration of the common database 400 will be explained.

The common database 400 includes a communication unit 401, a storage unit 402 and a process execution unit 410.

The communication unit 401 includes a communication interface circuit so that the common database 400 can establish the communication with the other servers and the devices via the network NW according to a predetermined communication protocol. The communication unit 401 transmits and receives the data to/from the devices and the like via the network NW using a secure communication channel where security is ensured. The explanation of the method of constructing the secure communication channel and the communication method is omitted since they are well known technology.

The storage unit 402 stores the encrypted sensitive data received by the communication unit 401 from the management server 200. The storage unit 402 includes a memory device such as a RAM (Random Access Memory) and a ROM (Read Only Memory), a fixed disk device such as a hard disk drive or a portable disk device such as a flexible disk and an optical disc, for example. The storage unit 402 stores computer programs, database, tables and the like used for various processing of the common database 400. The computer programs can be installed in the storage unit 402 from a portable computer-readable recording medium using a conventionally known setup program, for example. The portable recording medium can be a CD-ROM (Compact Disc Read Only Memory) and a DVD-ROM (Digital Versatile Disc Read Only Memory), for example. The computer programs can be installed from a predetermined server, for example.

The process execution unit 410 corresponding to a second process execution unit configured to execute the data processing of the encrypted sensitive data without executing the re-encryption. The process execution unit 410 includes an integrated data generation unit 411, a data processing unit 412 and a decryption request unit 413. The process execution unit 410 executes the data processing in accordance with the instruction for executing the data processing transmitted from the management server 200. Note that the management server 200 can have the function of the process execution unit 410.

The integrated data generation unit 411 generates an integrated data by integrating the encrypted sensitive data stored in the storage unit 402 based on an identifier (common ID in the example shown in Fig. 4) which is included in the sensitive data as the attribute item. As described in the explanation of the integrated data generation unit 311 of the calculation server 300, whether or not the sensitive data is integrated is determined in accordance with the content of the data processing. The detail of the integration method is as described above and the explanation is omitted. It is also possible that the integrated data generation unit 411 generates the integrated data in accordance with the request from the calculation server 300 and transmits the integrated data to the calculation server 300.

The data processing unit 412 executes the data processing based on the content of the data processing of the sensitive data. The data processing unit 412 transmits the execution result to the decryption request unit 413. Here, the content of the data processing is the retrieval processing and/or the statistical processing of at least a part of the attribute items of the sensitive data. In the present embodiment, the retrieval processing is the processing of extracting the rows (records) satisfying a predetermined condition in the table. In addition, the statistical processing is the processing executed by the function for tabulation, for example. Representatively, the statistical processing is the processing of counting the number of lines (records) of the table (COUNT function), the processing of summing the data of the numerical columns in the table (SUM function), the processing of calculating the average of the data of the numerical columns in the table (AVG function), the processing of calculating the maximum value of the data of an arbitrary column in the table (MAX function), the processing of calculating the minimum value of the data of an arbitrary column in the table (MIN function), and the like. However, the statistical processing is not limited to the above described examples. The statistical processing can be SQL syntax such as "GROUP BY" for grouping (classifying) the data by a target segment and "ORDER BY" for rearranging the data in ascending or descending order.

The processing request of the data processing can be a query described in the SQL statement, for example. More specifically, as the SQL statement targeted at the table T1 which is the sensitive data shown in Fig. 3, the communication unit 401 receives the SQL statement indicated as "select avg (age) from 'table T1' where 'gender' = female;" as the processing request of the data processing from the management server 200, for example. Based on the SQL statement, the data processing unit 412 accesses the storage unit 402, extracts the record having the attribute value "female" of the attribute item "gender" in the table T1, and executes the processing of calculating the average value of the attribute values of the attribute item "age" in the extracted record. Since the data of the table T1 is encrypted as described above, the following processes are performed.

For example, an execution unit 223 requests the data providing server 100 to encrypt the query via the management server 200 for the match judgement of the condition of the where clause. Here, the data providing server 100 is the server encrypting the attribute item "gender" which is the conditional statement of the where clause. The management server 200 refers to the configuration file 211 and requests the data providing server 100 (data providing server 100-1 in the example shown in Fig. 3) encrypting the attribute item "gender" to encrypt the query. At this time, the management server 200 requests to encrypt the query by the same encryption scheme as that of the attribute item "gender" and acquires the conditional statement of the where clause. For example, with respect to the above described query "select avg (age) from 'table T1e' where 'gender' = female;," the data providing server 100-1 encrypts "female" by the encryption key used when encrypting the attribute item "female" in accordance with the request of the execution unit 223. Then, the data providing server 100-1 returns (transmits) "select avg (age) from 'the table T1e' where 'gender' = adt3h54...;" including the encrypted where clause to the data processing unit 412 of the common database 400.

Since the attribute values of the attribute item "age" are encrypted by the (additive) homomorphic encryption scheme where addition and subtraction can be performed in the encrypted state, the data processing unit 412 calculates the average value for the extracted record by using the conventionally known method. As described above, the data processing unit 412 can execute the SQL statement. Then, the execution result (the encrypted text indicating the average of the attribute values of "age" of the individuals having the attribute value "female" as "gender" in the above described example) is outputted. Although the not-integrated sensitive data is shown in the above described example, it goes without saying that the data processing can be also executed on the integrated data. Although the column name is not encrypted in the query in the above described example for the explanation, the query can be also processed in a state that the column name is encrypted.

The decryption request unit 413 requests the management server 200 to execute the decryption processing of the execution result of the data processing executed by the data processing unit 412. The decryption request unit 230 of the management server 200 requests the data providing server 100 to decrypt the execution result by the decryption key managed by the data providing server 100. Here, the data providing server is the server providing the sensitive data including the attribute item on which the data processing is executed. Namely, about the attribute value of the attribute item on which the data processing is executed, the execution result calculated for the statistical processing in the encrypted state is encrypted by the encryption key (user key) managed by the data providing server 100 which provides the sensitive data including the corresponding attribute item. Accordingly, the decryption processing should be executed by the data providing server 100 managing the decryption key corresponding to the encryption key. Therefore, the decryption request unit 230 of the management server 200 refers to the configuration file 211, acquires the information of the data providing server 100 providing the attribute item on which the data processing is executed, and transmits the processing request of the decryption processing to the data providing server 100.

### (Functional configuration of terminal device 500)

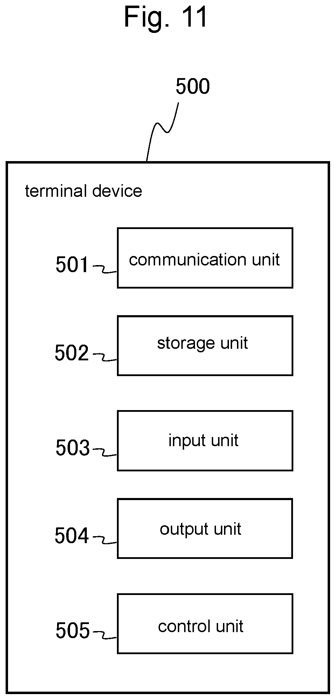

Fig. 11 is a functional block diagram showing an example of a function configuration of the terminal device 500. With reference to Fig. 11, an example of the functional configuration of the terminal device 500 will be explained.

The terminal device 500 includes a communication unit 501, a storage unit 502, an input unit 503, an output unit 504 and a control unit 505. As described above, the terminal device 500 can be an information processing device operated by the user who belongs to the organization joining in the data sharing system 1, for example.

The communication unit 501 has a similar function as the communication unit 101 of the data providing server 100. The communication unit 501 includes a communication interface circuit so that the terminal device 500 can establish the communication with the other servers and the devices via the network NW according to a predetermined communication protocol. The communication unit 501 transmits the received data to the control unit 505 and transmits the data received from the control unit 505 to the other servers and the devices via the network NW.

The storage unit 502 has a similar function as the storage unit 103 of the data providing server 100. The storage unit 502 stores computer programs, database, tables and the like used for various processing of the terminal device 500. The computer programs can be installed in the storage unit 502 from a portable computer-readable recording medium using a conventionally known setup program, for example. In addition, the storage unit 502 can store the encryption key (public key) for encrypting the execution result of the data processing transmitted from the terminal device 500 and the decryption key (secret key) for decrypting the execution result encrypted by the encryption key.

The input unit 503 is an interface for receiving a user input of the terminal device 500. The input unit 503 can be a keyboard, a touch panel and a microphone for detecting a sound input, for example. However, the input unit 503 is not limited to the above described devices. The user inputs the processing request of the data processing through the input unit 503. The processing request is written in SQL, for example.

The output unit 504 is an interface for outputting the information and notifying the user. The output unit 504 can be a display and a speaker for outputting sound, for example. However, the output unit 504 is not limited to the above described devices. The output unit 504 provides the execution result of the data processing to the user by displaying it on the display, for example.

The control unit 505 controls the functions of the terminal device 500. The control unit 505 is a processor such as a CPU (Central Processing Unit) operated based on the programs preliminarily stored in the storage unit 502. The control unit 505 transmits the processing request of the data processing inputted through the input unit 503 to the management server 200 via the communication unit 501. At this time, the control unit 505 can transmit the processing request together with the public key stored in the storage unit 502 to the management server 200. In addition, the control unit 505 acquires the execution result of the data processing via the communication unit 501. When the execution result of the data processing is encrypted by the public key of the terminal device 500, the execution result is obtained by decrypting it by the secret key which is paired with the public key. Note that the execution result can be encrypted by the common key for secure communication preliminarily or arbitrarily constructed in the data sharing system 1.

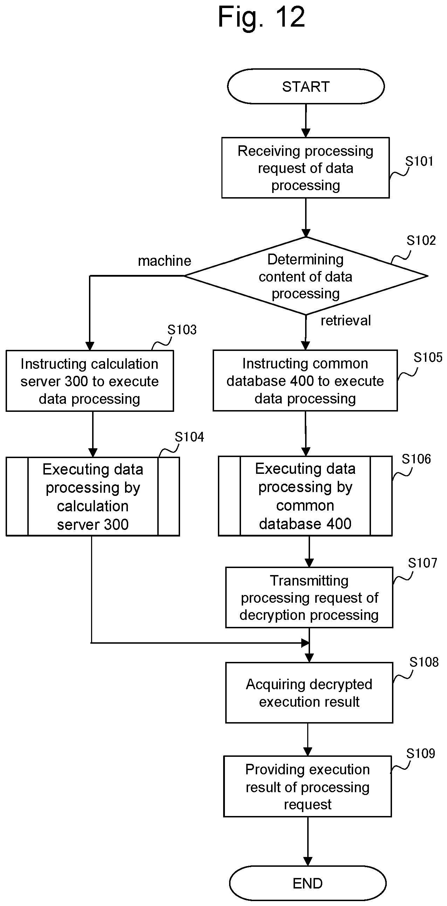

Fig. 12 is a flow chart showing an example of the data processing. With reference to Fig. 12, an example of a flow of the data processing in the data sharing system 1 will be explained. Note that the flow of the data processing shown in Fig. 12 is merely an example. The flow is not limited to the orders shown in Fig. 12.

In the step S101, the communication unit 201 of the management server 200 receives the processing request of the data processing from the terminal device 500. Note that the processing request of the data processing can be written in SQL, for example. In addition, the processing request can include the encryption key (public key) managed by the terminal device 500 for encrypting the decrypted execution result. In addition, the processing request can include the information for identifying the terminal device 500 from which the processing request is transmitted (e.g., the user information of the terminal device 500 transmitting the processing request). The communication unit 201 transmits the received processing request of the data processing to the control unit 220.

In Step S102, the control unit 220 of the management server 200 determines the content of the data processing of the sensitive data received by the communication unit 201. When the control unit 220 determines that the content of the data processing is the calculation related to the machine learning ("machine" in Step S102), the process is advanced to the step S103. Note that the control unit 220 can determine whether or not the user transmitting the processing request of the data processing has the authority by referring to the configuration file 211 shown in Fig. 7, for example. Thus, the control unit 220 can notify the error for the processing request transmitted from the user who does not have the authority.

In Step S103, the control unit 220 instructs the calculation server 300 to execute the data processing.

In Step S104, the calculation server 300 executes the data processing in accordance with the instruction from the management server 200. Although the explanation of the details of the data processing is omitted since it is described above, the execution result executed by the secure computation unit 313 of the calculation server 300 is decrypted by the system secret key in the system decryption unit 305. Then, the calculation server 300 transmits the execution result to the management server 200 via the communication unit 301 and the process is advanced to the step S108.

On the other hand, when the control unit 220 determines that the content of the data processing is the retrieval processing or the statistical processing in Step S102 ("retrieval" in Step S102), the process is advanced to the step S105.

In Step S105, the control unit 220 instructs the common database 400 to execute the data processing.

In Step S106, the common database 400 executes the data processing in accordance with the instruction from the management server 200. Although the explanation of the details of the data processing is omitted since it is described above, the sensitive data is encrypted by the encryption scheme that is capable of performing the calculation in the encrypted state. Therefore, the data processing unit 412 of the common database 400 can calculate the sensitive data in the encrypted state in accordance with the processing request of the data processing and the execution result is also in the encrypted state. The decryption request unit 413 of the common database 400 transmits the execution result to the management server 200.

In Step S107, the decryption request unit 230 of the management server 200 transmits the processing request of the decryption processing of the execution result. For example, the decryption request unit 230 refers to the configuration file 211, and transmits the processing request of the decryption processing to the data providing server 100 providing the attribute item specified as the object of the data processing (e.g., retrieval processing) via the communication unit 201. In accordance with the processing request of the decryption processing, the data providing server 100 executes the decryption processing of the execution result based on the decryption key.

In Step S108, the decryption request unit 230 of the management server 200 acquires the decrypted execution result via the communication unit 201. In addition, the communication unit 201 of the management server 200 acquires the decrypted execution result from the calculation server 300.

In Step S109, the communication unit 201 of the management server 200 provides the decrypted execution result acquired in Step S108 to the terminal device 500 transmitting the processing request of the data. The decrypted execution result can be encrypted by the public key transmitted from the terminal device 500 when the processing request of the data is transmitted. Alternatively, the decrypted execution result can be encrypted by the session key. When the acquired execution result is encrypted by the public key of the terminal device 500, the terminal device 500 decrypts the execution result by the secret key. Consequently, the execution result is not disclosed to other than the data providing server 100 providing the data and the terminal device 500 transmitting the processing request of the data processing. Thus, the information leakage can be prevented. As described above, the data processing is executed in the data sharing system 1.

### (Hardware configuration diagram)

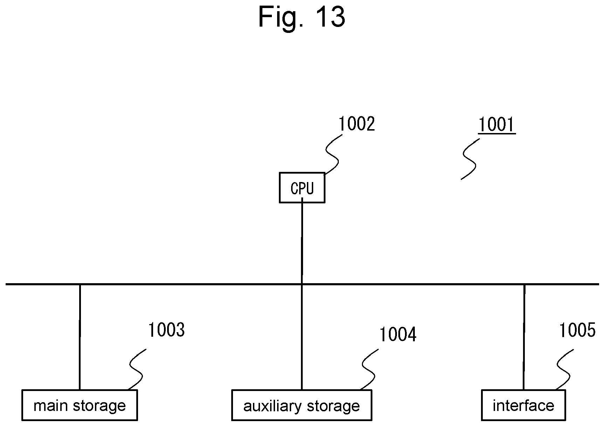

Fig. 13 is a block diagram showing a hardware configuration of the data providing server 100. The data providing server 100 is implemented in a computer 1001. The computer 1001 includes a CPU 1002, a main storage 1003, an auxiliary storage 1004 and an interface 1005.

The operations of each configuration of the data providing server 100 are stored in the auxiliary storage 1004 in the form of programs. The CPU 1002 reads the programs from the auxiliary storage 1004, expands the programs in the main storage 1003, and executes the above described processing according to the programs. In addition, the CPU 1002 secures a storage area in the main storage 1003 according to the programs. Specifically, the programs make the computer 1001 execute the data processing.

Note that the auxiliary storage 1004 is an example of a non-transitory tangible medium. A magnetic disk, a magneto-optical disk, a CD-ROM, a DVD-ROM, a semiconductor memory and the like connected via the interface 1005 can be listed as the other examples of the non-transitory tangible medium. Furthermore, when the programs are distributed to the computer 1001 via the network, the computer 1001 receiving the delivery can expand the programs in the main storage 1003 to execute the processing.

In addition, the programs can be prepared for achieving only a part of the above described functions. Furthermore, the programs can be a so-called difference file (difference program) for achieving the above described functions while combined with the other programs already stored in the auxiliary storage 1004. Note that the hardware configuration shown in Fig. 13 can be used also for the management server 200, the calculation server 300, the common database 400 and the terminal device 500. Same as the above described data providing server 100, the operations of components of the above described devices are also achieved by the CPU which is operated in accordance with the programs stored in the auxiliary storage.

### (Explanation of effect)

As described above, the data sharing system of the present embodiment includes a plurality of data providing servers, a common database, a management server and a calculation server. The common database stores the sensitive data encrypted by each of the data providing servers. The management server receives the processing request of the data processing to be executed on the sensitive data stored in the common database. Then, the management server instructs the calculation server (first process execution unit) and/or the common database (second process execution unit) to execute the data processing based on the content of the data processing. Here, the calculation server is configured to execute the data processing by executing the re-encryption of the encrypted sensitive data in a predetermined encryption scheme and the common database is configured to execute the data processing without executing the re-encryption of the encrypted sensitive data. As described above, since the management server instructs the device capable of executing secure and efficient calculation processing to execute the data processing based on the content of the data processing, the data possessed by each organization can be utilized efficiently without disclosing the detail of the data to the other organizations.

Furthermore, in the data sharing system of the present embodiment, the sensitive data includes the attribute values of each of the attribute items and the data processing of the calculation related to the machine learning and/or the retrieval processing is executed on the sensitive data in which at least a part of the attribute values is encrypted. Not only simple calculation processing (e.g., retrieval processing) such as match judgement but also the calculation processing (machine learning) requiring highly advanced numerical calculation can be executed securely. Thus, the range of utilizing the sensitive data can be broadened and the data processing contributing to precise prediction can be executed.

Furthermore, in the present embodiment, the management server requests the data providing server providing the sensitive data including the attribute item on which the data processing is executed to decrypt the execution result on which the data processing (retrieval processing and/or statistical processing) is executed by the common database using the decryption key managed by the data providing server. Consequently, the decryption of the execution result in the common database can be managed by the data providing server side (user providing the data). Thus, the information leakage can be prevented.

Furthermore, in the present embodiment, the execution result of the data processing (machine learning) executed on the sensitive data converted into a predetermined encryption space based on the re-encryption key is decrypted by the calculation server using the system key whose access authority is possessed only by the administrator of the data sharing system. Accordingly, the data processing of the sensitive data possessed by each of the data providing servers can be executed without disclosing the content to the other organizations (participants of the data sharing system).

Furthermore, in the present embodiment, the integrated data is generated by integrating a plurality of encrypted sensitive data in accordance with the content of the data processing to execute the data processing. Consequently, the organization joined in the data sharing system can execute the machine learning and the retrieval processing by using the attribute values of the attribute items possessed by the other organizations. As a result, even when the organization only has sparse data, the organization can utilize the data of the other organizations joined in the data sharing system.

### [Embodiment 2]

In the embodiment 2, the method of the re-encryption is different from the embodiment 1. Namely, in the embodiment 1, the calculation server 300 re-encrypts the sensitive data encrypted in each of the data providing servers 100 into the same encryption scheme (encryption space) by the re-encryption key without decrypting the encrypted sensitive data. Different from the embodiment 1, the calculation server 1300 constructs a virtual execution environment protected from a standard execution environment. The sensitive data encrypted in each of the data providing servers 100 is decrypted in the virtual execution environment and then re-encrypted into the same encryption scheme in the embodiment 2. In the virtual execution environment protected from the standard execution environment, the access from the unauthenticated users can be prevented. Thus, after the encrypted sensitive data is decrypted, the sensitive data can be re-encrypted into a predetermined encryption scheme securely. In addition, since the re-encryption is executed in a temporarily constructed virtual execution environment, security level can be increased.

A data sharing system 2 of the embodiment 2 is different from the data sharing system 1 of the embodiment 1 in that the data sharing system 2 includes the calculation server 1300 instead of the calculation server 300. The other configurations are same. Accordingly, the explanation of the configuration overlapped with the embodiment 1 will be omitted.

### (Functional configuration of calculation server 1300)

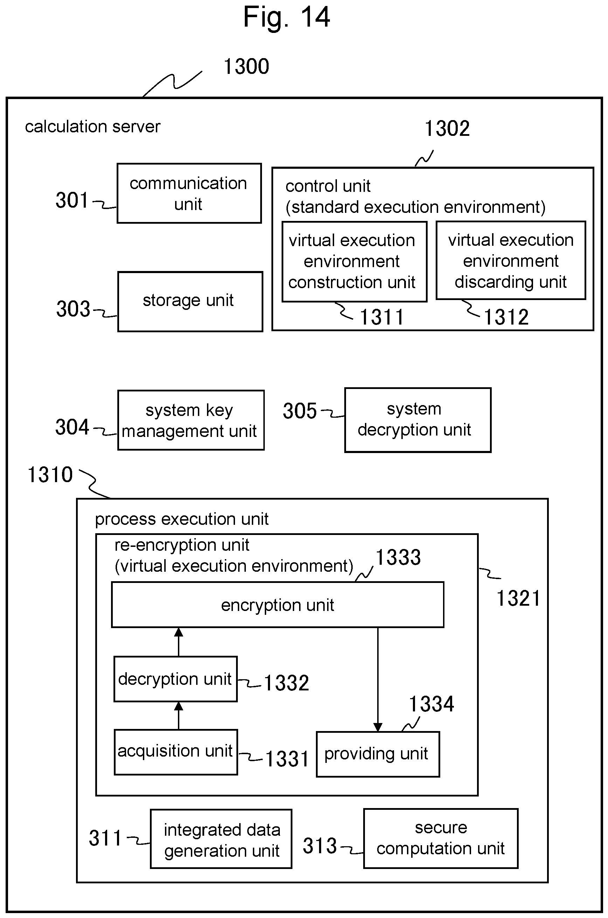

Fig. 14 is a functional block diagram showing an example of a functional configuration of the calculation server 1300. With reference to Fig. 14, an example of a functional configuration of the calculation server 1300 will be explained.

The calculation server 1300 includes the communication unit 301, a control unit 1302, the storage unit 303, the system key management unit 304, the system decryption unit 305 and a process execution unit 1310.

The communication unit 301, the storage unit 303, the system key management unit 304 and the system decryption unit 305 have the same functions as those of the calculation server 300 of the embodiment 1. Thus, the explanation of these units is omitted.

The control unit 1302 includes a virtual execution environment construction unit 1311 and a virtual execution environment discarding unit 1312. The control unit 1302 controls to construct the virtual execution environment for re-encrypting (converting) the sensitive data acquired from the common database 400 into a predetermined encryption scheme.

The virtual execution environment construction unit 1311 constructs the virtual execution environment. For example, it is possible to construct the virtual execution environment in accordance with the instruction transmitted from the management server 200. A not-illustrated OS is mounted on the virtual execution environment. The OS includes a re-encryption unit 1321.

The virtual execution environment discarding unit 1312 discards (eliminates) the above described virtual execution environment. The virtual execution environment discarding unit 1312 discards the virtual execution environment by deleting a predetermined data indicating the virtual execution environment, for example. It is possible to discard the virtual execution environment after the sensitive data is re-encrypted into a predetermined encrypted scheme or discard the virtual execution environment based on the instruction of the authenticated user, for example. Alternatively, it is possible to eliminate the virtual execution environment after a predetermined time has elapsed.

The process execution unit 1310 includes the re-encryption unit 1321, the integrated data generation unit 311 and the secure computation unit 313. The integrated data generation unit 311 and the secure computation unit 313 have the same functions as those of the calculation server 300 of the embodiment 1. Thus, the explanation of these units is omitted.

The re-encryption unit 1321 includes an acquisition unit 1331, a decryption unit 1332, an encryption unit 1333 and a providing unit 1334.

The acquisition unit 1331 acquires the encrypted sensitive data from the storage unit 303. In addition, the acquisition unit 1331 acquires the user key (secret key) from the user key management unit 104 of the data providing server 100 providing the sensitive data and acquires the system key (public key) from the system key management unit 304. It is necessary to acquire the user key from the data providing server 100 in a reliable environment.

The decryption unit 1332 decrypts the encrypted sensitive data by the user key corresponding to the data providing server 100 encrypting the sensitive data.

The encryption unit 1333 encrypts the decrypted sensitive data by the system key. The encryption unit 1333 executes the encryption in accordance with the encryption scheme of the encrypted sensitive data. For example, the sensitive data encrypted by the homomorphic encryption scheme in the data providing server 100 is re-encrypted by the same homomorphic encryption scheme using the system key acquired from the system key management unit 304. Alternatively, the sensitive data encrypted by AES is re-encrypted by the same AES using the system key.

Furthermore, the encryption unit 1333 can execute the encryption by the encryption scheme in accordance with the processing purpose of the encrypted sensitive data. For example, when highly advanced algorithm calculation processing is executed on the sensitive data, the encryption unit 1333 can re-encrypt the sensitive data encrypted by the encryption scheme suitable for storage, simple calculation or retrieval by the encryption scheme suitable for highly advanced algorithm calculation processing using the re-encryption key. More specifically, the sensitive data encrypted by the order-preserving encryption scheme can be re-encrypted by the homomorphic encryption scheme. Alternatively, the sensitive data encrypted by the homomorphic encryption scheme can be re-encrypted by the fully homomorphic encryption scheme. Note that the encryption unit 1333 can execute the re-encryption by the encryption scheme corresponding to the data format (e.g., string, numerical value) of the sensitive data.

The providing unit 1334 provides the sensitive data re-encrypted into a predetermined encryption scheme by the encryption unit 1333 to the standard execution environment or the like. For example, the re-encrypted sensitive data is stored in the storage unit 303.

In addition, the user key used when the decryption unit 1332 decrypts the encrypted sensitive data can be discarded when the virtual execution environment discarding unit 1312 discards the virtual execution environment.

The secure computation unit 313 is re-encrypted as described above and the data processing is executed on the sensitive data stored in the storage unit 303.

### (Explanation of effect)

As described above, the data sharing system of the present embodiment constructs the virtual execution environment protected from the standard execution environment and executes the re-encryption of the sensitive data in the virtual execution environment. Since the sensitive data is decrypted in the virtual execution environment protected from the standard execution environment, the access from the unauthenticated users can be prevented. Thus, security is ensured. Furthermore, since the sensitive data is decrypted once, it is easy to perform the re-encryption by applying an optimal encryption scheme in accordance with the content of the data processing (e.g., machine learning, data preprocessing, data analysis) efficiently.

The above described embodiments can be carried out in other various forms. Various omission, replacement and change can be applied within the range not deviating from the summary of the present invention. The embodiments and the variation of them are included in the range and summary of the present invention and also included in the invention described in the claims and the range equivalent to them.

### [Description of the Reference Numerals]

1: data sharing system; 100: data providing server; 101: communication unit; 102: control unit; 103: storage unit; 104: user key management unit; 105: encryption unit; 106: user decryption unit; 200: management server; 201: communication unit; 210: storage unit; 211: configuration file; 220: control unit; 221: total control unit; 223: execution unit; 230: decryption request unit; 300: calculation server; 301: communication unit; 302: control unit; 303 storage unit; 304: system key management unit; 305: system decryption unit; 310: process execution unit; 311: integrated data generation unit; 312: re-encryption unit; 313: secure computation unit; 400: common database; 401: communication unit; 402: storage unit; 410: process execution unit; 411: integrated data generation unit; 412: data processing unit; 413: decryption request unit; 500: terminal device; 501: communication unit; 502: storage unit; 503: input unit; 504: output unit; 505: control unit; 1001: computer; 1003 main storage; 1004: auxiliary storage; 1005: interface; 1300: calculation server; 1302: control unit; 1310: process execution unit; 1311: virtual execution environment construction unit; 1312: virtual execution environment discarding unit; 1321: re-encryption unit; 1331: acquisition unit; 1332: decryption unit; 1333: encryption unit; 1334: providing unit

## Claims

1. A data sharing system, comprising:
a sensitive data acquisition unit configured to acquire a sensitive data;
an encryption unit configured to encrypt the sensitive data;
a storage unit configured to store the encrypted sensitive data;
a reception unit configured to receive a processing request of a data processing on the sensitive data;
a first process execution unit configured to execute the data processing by executing a re-encryption of the encrypted sensitive data in a predetermined encryption scheme;
a second process execution unit configured to execute the data processing without executing the re-encryption; and
a control unit configured to instruct an execution of the data processing to the first process execution unit and/or the second process execution unit based on a content of the received data processing.

2. The data sharing system according to claim 1, wherein
the sensitive data includes attribute values for each of attribute items,
the encryption unit is configured to encrypt at least a part of the attribute values in the sensitive data,
the first process execution unit is configured to execute a calculation related to a machine learning as the data processing, and
the second process execution unit is configured to execute a retrieval processing and/or a statistical processing of at least a part of the attribute items of the sensitive data as the data processing.

3. The data sharing system according to claim 2, further comprising:
a user key management unit configured to manage user keys associated with each of users possessing the sensitive data; and
a user decryption unit configured to decrypt an execution result executed by the second process execution unit, wherein
the encryption unit is configured to encrypt the sensitive data based on each of the user keys associated with each of the users possessing the sensitive data, and
the user decryption unit is configured to decrypt the execution result based on each of the user keys associated with each of the users possessing the sensitive data including the attribute items on which the data processing is executed.

4. The data sharing system according to claim 3, further comprising:
a system key management unit configured to manage a system key, wherein
the first process execution unit includes a re-encryption unit configured to execute the re-encryption based on the system key.

5. The data sharing system according to claim 4, wherein
the system key includes a pair of a system public key and a system secret key,
the user key includes a pair of a user public key and a user secret key,
the re-encryption unit is configured to acquire the user secret key associated with each of the users possessing the sensitive data on which the data processing is executed, the user secret key being acquired from the user key management unit, and
the re-encryption unit is configured to execute the re-encryption based on the user secret key and the system public key.

6. The data sharing system according to claim 5, further comprising:
a system decryption unit configured to decrypt the execution result executed by the first process execution unit based on the system secret key.

7. The data sharing system according to any one of claims 2 to 6, wherein
the first process execution unit and the second process execution unit are configured to generate an integrated data obtained by integrating two or more encrypted sensitive data stored in the storage unit based on an identifier which is included in the sensitive data as the attribute items in accordance with the content of the data processing, and
the first process execution unit and the second process execution unit are configured to execute the data processing on the integrated data.

8. A data sharing method executed in a computer having a control unit and a storage unit, the method comprising:
a step of acquiring a sensitive data by the control unit;
a step of encrypting the sensitive data by the control unit;
a step of storing the encrypted sensitive data in the storage unit;
a step of receiving a processing request of a data processing of the sensitive data by the control unit;
a first step of executing the data processing by executing a re-encryption of the encrypted sensitive data by the control unit;
a second step of executing the data processing without executing the re-encryption by the control unit; and
a step of executing the first step and/or the second step based on a content of the received data processing by the control unit.

9. A non-transitory computer readable medium having stored thereon an information processing program for making the computer execute the data sharing method according to claim 8.
